# EUROPEAN PATENT APPLICATION

(11) **EP 3 845 498 A1**
(43) Date of publication of application: **07.07.2021**
(21) Application number: 20217826.5
(22) Date of filing: 30.12.2020
(51) Int. Cl.: C02F 1/52, B09B 5/00, C05B 7/00, C05F 7/00, B01J 19/00

(54) **APPARATUS AND METHOD FOR THE TREATMENT OF LIQUID ORGANIC MATRICES FROM MUNICIPAL SOLID WASTE**

(30) Priority: 30.12.2019 IT 201900025732
(71) Applicant: EcoReWaste s.r.l., 35042 Este (PD) (IT)
(72) Inventor: POLETTI, Luca, 06121 Perugia (PG) (IT); POLETTI, Roberto, 06121 Perugia (PG) (IT)
(74) Representative: Ercolani, Simone Pietro

(57) **Abstract**

Apparatus (1) for the treatment of the liquid fraction (A) obtained from municipal solid waste, comprising at least one treatment reactor (100) of said liquid fraction (A), first means (3) for the introduction of magnesium in the form of MgO or MgCl₂ or other sources of Mg ions, into said reactor containing said liquid fraction (A) and second means (4) for the introduction of one or more alkalizing fluids or compounds for said liquid fraction, characterized in that it further comprises third means (5) for the introduction of phosphorus in the form of H₃PO₄ or phosphate salts or other sources of phosphate ions, into said reactor, and in that it comprises a control unit (6) to regulate the amount of phosphate and magnesium introduced into said reactor depending on the initial composition of said liquid organic fraction present in said reactor and to regulate the addition of alkalizing fluids or compounds depending on the pH of said liquid fraction.

## Description

### FIELD OF THE INVENTION

The present invention relates to a process and an apparatus for the treatment of liquid organic matrices and in particular for the treatment of the liquid residue of an organic fraction of municipal solid waste (MSW).

### KNOWN PRIOR ART

OFMSW (Organic Fraction of Municipal Solid Waste) is the organic material that is collected separately with respect to undifferentiated waste. OFMSW comprises the so-called wet waste, which comprises food residues, food-contaminated paper, plant residues and the like. OFMSW can make up 30 to 40% by weight of municipal solid waste.

It is known in the art the treatment of OFMSW by composting to obtain a soil conditioner to be used in agriculture or anaerobic digestion to obtain energy in the form of biogas. One of the problems inherent to the management of OFMSW, including its storage, is represented by the formation of a leachate potentially rich in pathogens. In order to solve this problem, squeezing machines have been developed that allow to separate most of the liquid from the solid fraction of OFMSW, before composting or other treatment of the same. An example of such machines is described for example in GB2519052 and more recently in WO 2019/130192. However, the problem of treating the liquid fraction separated from the rest of OFMSW as well as the liquid digestates from anaerobic digestion in an effective and economically viable way remains.

Patent CN110603230 to Fraunhofer et Alii describes a process for the treatment of waste, comprising the anaerobic fermentation of said waste to produce biogas, and then a precipitation with ammonium magnesium phosphate (MAP precipitation) of the resulting liquid phase, wherein the liquid phase comprises solid components.

Thus, it is an object of the present invention to provide a process and an apparatus for solving such a problem.

### SUMMARY OF THE INVENTION

These and other objects are achieved by an apparatus according to claim 1. The invention further relates to a process according to claim 9. Preferred aspects of the invention are the subject matter of the independent claims.

The invention relates to the application of a chemical process of precipitation of inorganic ions and co-precipitation of organic matter from which a compound having prevailing struvitic composition called Struvite-Enriched Precipitated (SEP) is obtained, which denotes relevant chemical-agronomic properties due to its exchange properties, thanks to which the release of ammonium occurs in relation to the nutritional needs of plants mediated by the release of chemical substances from the root systems.

Therefore, by the aforementioned term (compound having prevailing struvitic composition), it is intended herein to denote the compound, i.e., the compounds obtained by the formation/co-precipitation of other salts, next to struvite. Examples of salts are various magnesium phosphates, among which Newberite (MgHPO₄.3H₂O), dittmarite (MgNH₄PO₄.H₂O and bobierrite Mg₃(PO₄)₂), K-containing compounds (K-struvite MgKPO₄.6H₂O) and calcium-containing compounds including calcium ammonium phosphate (CaNH₄PO₄.7H₂O), amorphous calcium phosphate, brushite (CaHPO₄ 2H₂O). This jumble of co-precipitating salt compounds of struvite gives rise to a crystalline-amorphous precipitate called PREPSaDs (PREcipitated Phosphate Salts and Derivatives).

Furthermore, it is also possible that part of the phosphorus in the treated liquid fraction precipitates in the form of phosphate compounds which are intermediates to struvite, such as Fe-P complexes or hydroxyapatite (HAP); such compounds may find use in agriculture as low-solubility fertilizers such as struvite.

Furthermore, PREPSaDs may comprise co-precipitated organic matter from the starting matrix, precisely rich in organic matter. This would give rise to the formation of an interesting struvite/organic struvitic precipitate (O-SEP) complex.

The liquid fraction treated according to the present invention may be derived from anaerobic digestates from OFMSW, from the OFMSW squeezing process of the type described in the application WO 2019/130192 to Waste Engineering SAGL and, possibly, from landfill leachates, as well as from storage. In other words, the liquid fraction may have been treated for example to obtain biogas, before being treated according to the present invention. Therefore, a further object of the invention is a biogas plant according to claim 8.

The invention starts from the observation that the formation of struvite in waste matrices with high concentrations of various types of chemical substances can take place in a controlled form by recovering a high amount of nitrogen present in the liquid matrix in the form of ammonium NH₄⁺.

The process of the invention, unlike those currently used in the industrial practice, aimed at capturing phosphorus is in fact also directed to the abatement of N-NH₄⁺ through the addition not only of a source of magnesium, for the realization of the precipitation of P as struvite, but also of an external source of phosphorus, as well as of a pH corrective.

In fact, the inventors have noticed that the mechanism underlying this reaction is influenced by a large number of factors including:
- the level of supersaturation of a matrix to be treated, which is far from the ideality of the diluted solutions, is the driving force of the process as it determines the conditions for the establishment of the primary nucleation process.
- the pH level required to trigger struvite precipitation is between 8 and 9.5. In fact, higher pH values can shift the reaction in favor of the formation of other compounds such as Mg₃(PO₄)₂ (as NH₃ tends to volatilize) or Mg(OH)₂.
- the molar ratio between ionic species (Mg/P, P/Ca). A Ca/Mg molar ratio > 1 tends to disfavor the formation of crystalline compounds in favor of amorphous phosphate-calcium substances
- the presence of seeding crystals, which results in the reduction of activation barriers in the formation of crystalline products and facilitates the formation of crystals and microcrystalline precipitates on the surface of the seeding particles by improving the crystal dehydration and preventing crystal loss with the effluent. It also shortens the nucleation time (promoting an increase in the average crystal size, CSD) and increases the crystal growth rate.

Such findings have been embodied in the present invention, which provides for adding, to the liquid fraction obtained from organic solid waste, in addition to magnesium in the form of MgO or MgCl₂ or other sources of Mg ions and one or more alkalizing fluids or compounds for said liquid fraction, also phosphorus in the form of H₃PO₄ or phosphate salts or other sources of phosphate ions, and regulating the amounts of phosphate and magnesium supplied into said reactor depending on the initial composition of said liquid organic fraction in the reactor, and regulating the addition of alkalizing fluids or compounds depending on the pH of said liquid fraction.

### BRIEF DESCRIPTION OF THE DRAWINGS

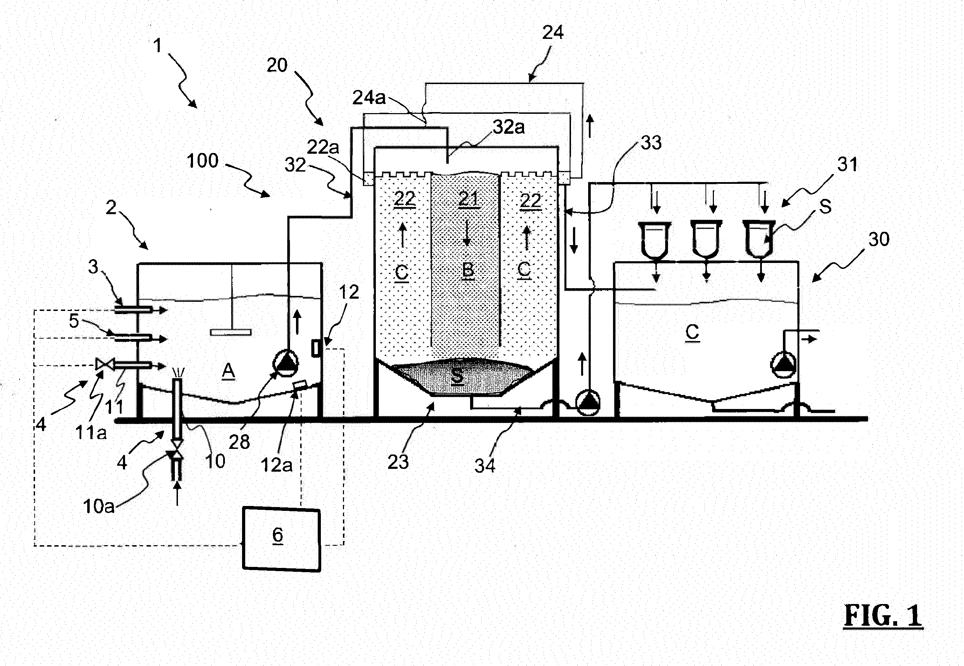

A number of particular embodiments of the present invention will now be described, by way of example only and without limitation, with reference to the attached figures, wherein figure 1 is a schematic view of an apparatus for the formation of compounds having prevailing struvitic composition starting from the liquid organic fraction produced by a bioreactor for biogas production.

### DETAILED DESCRIPTION OF SOME EMBODIMENTS OF THE PRESENT INVENTION

With particular reference to said figures, an apparatus for the formation of compounds having prevailing struvitic composition starting from the liquid organic fraction derived from OFMSW, for example a liquid fraction previously treated in a bioreactor for biogas production, has been depicted by 1.

With reference to fig. 1, the apparatus 1 for the treatment of the liquid fraction A obtained from municipal solid waste, comprises a treatment reactor 100 of said liquid fraction A, first means 3 for the introduction or supply of magnesium into said reactor containing said liquid fraction A. The magnesium supplied to the reactor is in a form adapted to generate Mg ions capable of reacting with the phosphate ions present in the liquid matrix A. Magnesium compounds adapted for this purpose are MgO, MgCl₂ or other sources of Mg ions.

The reactor further comprises second means 4 for the introduction of one or more fluids or compounds capable of changing the pH of the liquid matrix A, in particular to alkalinize the liquid fraction A. The reactor comprises third means 5 for the introduction of phosphorus into the reactor; the phosphorus compounds supplied to the reactor are in a form adapted to generate phosphate ions capable of reacting with Mg and ammonium ions present in the liquid matrix A. Phosphorus compounds suitable for this purpose are those in the form of H₃PO₄ or phosphate salts or other sources of phosphate ions.

The apparatus 1 of the invention further comprises a control unit 6 configured to regulate the amounts of phosphate and magnesium introduced into the reactor depending on the initial composition of the liquid organic fraction A present in the reactor, and to regulate the addition of alkalizing fluids or compounds depending on the pH of said liquid fraction A.

Preferably, as shown in fig. 1, the reactor comprises a pre-treatment basin 2 of the liquid organic fraction A (i.e., matrix) which is provided with the aforementioned first 3, second 4 and third 5 supply means of magnesium, pH regulating fluids or compounds and phosphorus. In the basin 2, optimal conditions are thus generated for causing the nucleation of crystals having prevailing struvitic composition (SEP).

Compared to document CN110603230 described above, the presence of the pre-treatment basin 2 allows the homogenization/equalization of the loads.

Furthermore, the basin 2 allows the alkalinization of the liquid organic fraction A for the CO₂ volatilization and stripping with consequent saving of external alkalizing agent of chemical origin to be introduced from outside during the reaction of struvite precipitation. Additionally, the pre-treatment basin 2 makes the volatilization and/or stripping of NH₃ possible, which strengthens in conjunction with increasing pH and which offers the advantage of achieving greater ammonium abatements. Finally, the presence of the basin 2 makes it possible to promote primary and, possibly, secondary nucleation in a controlled and compartmentalized manner with favorable results in terms of "crystal designing", i.e., control of the size, growth and morphology of the crystals created during the secondary nucleation.

Such pre-treatment basin 2 is connected to a crystallization basin 20 which promotes the phenomena of causing the secondary nucleation (also by seeding), the growth and precipitation of said SEP crystals contained in the organic liquid fraction B treated in said pre-treatment basin 2. Preferably, there is also a basin 30 comprising known means for the separation of said crystals from the liquid matrix 2, such as filters 31 (draining bags).

In other embodiments, the filters 31 may also be replaced by, or may cooperate with, a centrifuge, a belt press or other devices adapted for performing the solid-liquid separation. According to an embodiment, said second means 4 for introducing alkalizing compounds or fluids comprise a duct 10 adapted to introduce pressurized air. The duct is known per se in the art and provides, for example, a tubular device with diffusers for generating bubbles in the liquid fraction A in order to perform the stripping of carbon dioxide and/or ammonia which is/are from the liquid fraction A. The second means 4 also comprise a second duct 11 for the supply of a basic solution, preferably NaOH, to the liquid fraction A.

The pre-treatment basin 2 further comprises: at least one sensor 12 for the measurement of pH and at least one sensor 12a for the measurement of the ammonium ion concentration. Said sensors 12 and 12a are connected to said control unit 6 to generate and send to the same a signal indicative of the pH values and ammonium ion concentration in the basin 2. The control unit 6 is connected to means 10a to regulate the supply of said air and to means 11a to regulate the supply of said NaOH solution to the pre-treatment basin 2.

The control unit is also connected to means (not shown) for regulating the amount of Mg and phosphate supplied to the liquid fraction A in the basin 2; said control unit 6 is configured to operate the control means 10a, 11a, depending on the pH level measured by the pH sensor 12 and depending on the ammonium concentration in said liquid fraction measured by the ammonium concentration sensor 12a.

The crystallization basin 20 comprises a first region 21 to which the organic liquid fraction A treated in the pre-treatment basin 2 is supplied by means of a pump 28 preferably immersed in the basin 2, and a duct 32. In figure 1, the treated liquid matrix is identified with the reference B. The crystallization basin 20 further comprises a second region 22 for containing or retaining the treated organic liquid fraction B after the precipitation of the SEP compounds having prevailing struvitic composition. Such fraction is denoted by the reference C and is free or with reduced content of said compounds having prevailing struvitic composition, and is also referred to as clarified organic liquid fraction. The first region 21 and the second region 22 are in fluidic communication to each other at the bottom portion 23 of the crystallization reactor 20, a bottom portion 23 in which said compounds having a prevailing struvitic composition S precipitated by said treated organic liquid fraction B coming from the pre-treatment basin 2 are deposited.

In the embodiment shown in fig. 1 the crystallization basin 20 provides for a cylindrical tank, wherein said first zone 21 comprises a first central duct which extends axially and vertically to the reactor and the second zone 22 comprises a cylindrical crown arranged outside said first central duct 21. Preferably, the bottom portion 23 of said second basin is shaped like a truncated cone to facilitate the collection of the precipitate.

In an embodiment, the reactor 100 further comprises a third basin 30 wherein a separation occurs between the precipitated compounds S and the liquid part C. The basin 30 is connected to the crystallization basin 20 by means for supplying said organic liquid fraction treated and free of said precipitated compounds having prevailing struvitic composition C coming from said second region 21 of the crystallization basin 20. According to the particular embodiment described herein, such supplying means comprise a duct 33 extending from the upper portion of the crystallization basin 20 to the basin 30. The duct 33 supplies the clarified liquid fraction C located in the second region 22 of the reactor 20 to the basin 30. As discussed above, the liquid fraction C at the part of the reactor where the duct 33 inlet is present is free or substantially free of said precipitated compounds having a prevailing struvitic composition.

The crystallization basin 20 further comprises a recirculation duct 24 of the fraction C from the second region 22, preferably from its top portion 22a where finer particles are, to the crystallization basin 20 itself at the first region 21. In the embodiment described herein, the outlet 24a of the recirculation duct enters the duct 32 at the outlet 32a of the duct 32, i.e., near the free surface of the fraction B contained in the first region 21. However, although not shown herein, such recirculation duct 24 may also not be connected to the duct 32 but lead the clarified fraction C directly to the first region 21. In another embodiment, the basin 20 may comprise a duct (not shown) for the introduction into the first region 21 of seeding substances comprising various types of compounds or substances capable of making the crystallization of the substance B more rapid. Such duct may be part of an auxiliary circuit external to the apparatus 1 that connects to the duct 32 or to the duct 24 of the recirculation circuit.

Below the basin 20, a duct 34 connects the crystallization basin 20 to filters 31 or similar means for filtering the compounds having prevailing struvitic composition S, which are precipitated from the fraction B and originating from the crystallization basin 20. The filters 31 are advantageously arranged above said third basin 30.

The method for the formation of compounds having prevailing struvitic composition starting from the liquid organic fraction derived from municipal solid waste and/or OFMSW, according to the invention comprises the steps of:
a) causing, in said liquid organic fraction, the nucleation of crystals having prevailing struvitic composition;
b) growing and precipitating said crystals having prevailing struvitic composition, which are contained in said organic liquid fraction treated in said step a).

In step a), it is further provided for introducing or supplying magnesium, phosphorus (as phosphate ion) and one or more alkalizing fluids or compounds to said liquid organic fraction. Advantageously, the ammonium ion concentration is detected and the pH value of the liquid fraction is also detected by the sensors 12 and 12a, respectively. The control unit 6 reads the pH values and the ammonium ion concentration and consequently regulates the amounts of magnesium, phosphate and alkalizing fluids or compounds supplied to the pre-treatment basin 2 so as to obtain a precipitation of compounds having prevailing struvitic composition S (i.e., SEP) such to achieve an effective and substantial abatement of nitrogen present as ammonium in the fraction A. In an embodiment, the method provides for the introduction of pressurized air into the liquid organic fraction for stripping carbon dioxide. The removal of carbon dioxide leads to a rise in pH up to or towards the desired range, i.e., the range between 8.0 and 9.5, end values included. Since CO₂ stripping may also result in the elimination of part of the ammonia present, such operation is controlled, preferably through the pH sensor 12 in order to remain in the desired range. If required, other alkalizing fluids or compounds, such as an aqueous solution of NaOH, are supplied to said liquid organic fraction. In other words, the method comprises the steps of measuring the pH value of said organic liquid fraction A and regulating the flow rate of said air and/or said sodium hydroxide in said organic liquid fraction A depending on the pH level measured. At a pH between 8 and 9.5, no more air or sodium hydroxide is supplied.

In an embodiment, it is further provided for introducing crystallization cores into the reactor 20, which may also have an inner conformation adapted for promoting the crystallization and precipitation of the precipitated SEP product. The part of liquid fraction rich in precipitates S is filtered off and the product obtained is dried.

Subsequently, it is provided for the washing of the dehydrated product and its drying, also with waste heat.

## Claims

1. Apparatus (1) for the treatment of the liquid fraction (A) obtained from municipal solid waste, comprising at least one treatment reactor (100) of said liquid fraction (A), first means (3) for the introduction of magnesium in the form of MgO or MgCl₂ or other sources of Mg ions, into said reactor containing said liquid fraction (A) and second means (4) for the introduction of one or more alkalizing fluids or compounds for said liquid fraction, **characterized in that** it further comprises third means (5) for the introduction of phosphorus in the form of H₃PO₄ or phosphate salts or other sources of phosphate ions, into said reactor, and **in that** it comprises a control unit (6) to regulate the amount of phosphate and magnesium introduced into said reactor depending on the initial composition of said liquid organic fraction present in said reactor and to regulate the addition of alkalizing fluids or compounds depending on the pH of said liquid fraction.

2. Apparatus (1) according to claim 1, wherein said reactor comprises a pre-treatment basin (2) of said liquid organic fraction (A) for causing the nucleation of crystals having prevailing struvitic composition, a crystallization basin (20) for causing the secondary nucleation, growth and precipitation of said crystals contained in the organic liquid fraction treated (B) in said pre-treatment basin (2), a basin (30) comprising separation means (31) of said crystals from said liquid matrix being also preferably present.

3. Apparatus according to claim 1 or 2, wherein said second means (4) for the introduction of one or more alkalizing fluids comprise a first duct (10) for the introduction of pressurized air preferably through tubular devices with bubble diffusers into said liquid organic fraction for stripping carbon dioxide and/or ammonia which is/are contained in said liquid organic fraction (A).

4. Apparatus (1) according to claim 2 or 3, wherein said second means (4) for the introduction of one or more alkalizing fluids comprise a second duct (11) for the introduction of sodium hydroxide into said liquid organic fraction.

5. Apparatus (1) according to one or more of claims 2 to 4, wherein said means for the introduction of Mg and phosphate and said means for the introduction of alkalizing fluid are arranged on said pre-treatment basin and wherein said pre-treatment basin (2) further comprises: at least one sensor (12) for the measurement of the pH of said organic liquid fraction (A) and at least one sensor for the measurement of the ammonium ion concentration, said sensors being linked to said control unit; means for regulating the supply of said air and/or said sodium hydroxide into said organic liquid fraction (A); means for regulating the amount of Mg and phosphate supplied to said liquid fraction; wherein said control unit (6) is configured for operating said regulation means depending on the pH level measured by said pH sensor (12) and depending on the ammonium concentration in said liquid fraction measured by said sensor of the ammonium concentration.

6. Apparatus (1) according to one or more of the preceding claims, **characterized in that** said crystallization basin (20) comprises a first zone (21) in which said organic liquid fraction (B) treated in said pre-treatment basin (20) is supplied and a second zone (22) in which said organic liquid fraction treated and lacking in or with a reduced content of said compounds having prevailing struvitic composition (C) is retained for its subsequent disposal, said first zone and said second zone being in fluidic communication to each other at the bottom portion (23) of said crystallization basin (2) for the collection of said compounds having prevailing struvitic composition (S), which are precipitated from said treated organic liquid fraction (B) coming from said pre-treatment basin (2).

7. Apparatus according to the preceding claim, wherein said crystallization basin (20) comprises a cylindrical tank, wherein said first zone (21) comprises a first central duct which extends axially and vertically to the crystallization basin and said second zone (22) comprises a cylindrical crown arranged outside said first central duct.

8. Biogas plant comprising pressing machines for the treatment of the organic solid waste and for obtaining a liquid organic fraction and an apparatus (1) for the formation of compounds having prevailing struvitic composition (S) according to one or more of claims 1 to 7 starting from the liquid organic fraction obtained by mechanical pressing means.

9. Method for the formation of compounds having prevailing struvitic composition starting from the liquid organic fraction produced by a bioreactor for the production of biogas, comprising the steps of:
a) causing, in said liquid organic fraction, the nucleation of crystals having prevailing struvitic composition;
b) growing and precipitating said crystals having prevailing struvitic composition, which are contained in said organic liquid fraction treated in said step a);
wherein said step a) comprises the step a1) of introducing magnesium in said liquid organic fraction and the step a2) of introducing one or more alkalizing fluids in said liquid organic fraction;
**characterized in that** said step a) also comprises the step a3) of introducing phosphorus in said liquid organic fraction, and the step a4) of regulating the amounts of said phosphorus and said magnesium introduced in said liquid organic fraction depending on the initial composition of said liquid organic fraction.

10. Method according to claim 9, **characterized in that** said step a) occurs in a pre-treatment basin (2) and said step b) occurs in a crystallization basin (20).

11. Method according to claim 9 or 10, **characterized in that** said step a2) comprises the step a2a) of introducing pressurized air into said liquid organic fraction for stripping carbon dioxide and/or ammonia which is/are contained in said liquid organic fraction, said step a2a) occurring before steps a1) and a3).

12. Method according to one or more of claims 9 to 11, **characterized in that** said step a2) comprises the step a2b) of introducing sodium hydroxide into said liquid organic fraction, said step a2b) occurring simultaneously with, or subsequently to said steps a1) and a3).

13. Method according to one or more of claims 9 to 12, **characterized in that** said step a) comprises the step a5) of measuring the pH value of said organic liquid fraction (A), and the step a6) of regulating the flow rate of said air and/or said sodium hydroxide in said organic liquid fraction (A) depending on the pH level measured in said step a5).

14. Method according to claim 13, **characterized in that** said pH measured in said step a5) is between 8 and 9.5.

15. Method according to claim 14, **characterized in that** if said pH measured in said step a5) is higher than 9.5, said amount of air and/or sodium hydroxide introduced in said liquid organic fraction is equal to zero.
